# EUROPÄISCHE PATENTSCHRIFT

(11) **EP 1 884 902 B1**
(45) Veröffentlichungstag und Bekanntmachung des Hinweises auf die Patenterteilung: **02.04.2014**
(21) Anmeldenummer: 05810278.1
(22) Anmeldetag: 06.05.2005
(51) Int. Cl.: H02H 1/00

(54) **VERFAHREN UND EINRICHTUNG ZUM VERHINDERN VON DURCH DEFEKTE IN ELEKTRISCHEN SCHALTUNGEN UND ANORDNUNGEN VERURSACHTEM FEUER**
METHOD AND DEVICE FOR PREVENTING FIRE CAUSED BY DEFECTS IN ELECTRIC CIRCUITS AND ARRANGEMENTS
PROCEDE ET DISPOSITIF DE PREVENTION DES INCENDIES DUS A DES DEFAILLANCES DANS DES CIRCUITS ET DES INSTALLATIONS ELECTRIQUES

(43) Veröffentlichungstag der Anmeldung: 06.02.2008
(73) Patentinhaber: Korolyov, Igor Sergeevich, Moscow, 123181 (RU); Korolyov, Andrey Igorevich, Moscow, 123181 (RU); Novikova, Elena Igorevna, Moscow 123181 (RU)
(72) Erfinder: Korolyov, Igor Sergeevich, Moscow, 123181 (RU); Korolyov, Andrey Igorevich, Moscow, 123181 (RU); Novikova, Elena Igorevna, Moscow 123181 (RU)
(74) Vertreter: Jeck, Anton
(86) Internationale Anmeldenummer: PCT/RU2005/000251
(87) Internationale Veröffentlichungsnummer: WO 2006/121364

(56) Entgegenhaltungen:
- EP-A2- 0 477 959
- EP-A2- 0 504 125
- WO-A1-01/73912
- RU-A- 2003 120 730
- RU-C1- 2 136 097
- SU-A1- 945 936
- SU-A1- 1 144 162
- SU-A1- 1 728 919
- SU-A3- 1 808 163
- US-A- 5 654 684
- US-A- 5 682 101

## Beschreibung

Die Erfindung gehört zum Gebiet der Brandsicherheit und der Elektroenergetik, und zwar handelt es sich um ein Verfahren und Vorrichtungen zur Vorbeugung von Bränden, die aufgrund von Störungen in elektrischen Netzen oder in Elektroanlagen ausbrechen können, die in Räumen, Bauwerken, Gebäuden, Flugzeugen, Schiffen, der Eisenbahn und in anderen Objekten installiert sind.

Der Betrieb von Wohn-, Haushalts-, Produktions- und anderen Objekten wird von Bränden oder Explosionen begleitet, die infolge von Störungen in elektrischen Netzen und in Elektroanlagen entstehen. Zu den Hauptstörungen, die oft einen großen materiellen Schaden, den Tod oder eine Körperverletzung verursachen, gehören die Funkenbildung in einer Stromleitung, der Kurzschluss, Überlaststrom, Ableitungsstrom und die unzulässig starke Absenkung der Netzspannung. Gemäß der offiziellen Statistik nimmt in Russland der Brand der elektrischen Ausrüstung in Bezug auf die Anzahl und die Folgenschwere den zweiten Platz nach dem fahrlässigen Umgang mit Feuer ein.

Die oben angegebenen Störungen treten beim Betrieb von gefährdeten Objekten, beispielsweise Objekten der Gewinnung, Lagerung und Beförderung von Erdölprodukten und Gas, Objekten der Bergbauindustrie, Objekten, bei denen giftige und explosive Stoffe gehandhabt werden, sowie anderen brand- bzw. explosionsgefährlichen Objekten mit spezieller militärischer und ziviler Zweckbestimmung, besonders gefährlich auf.

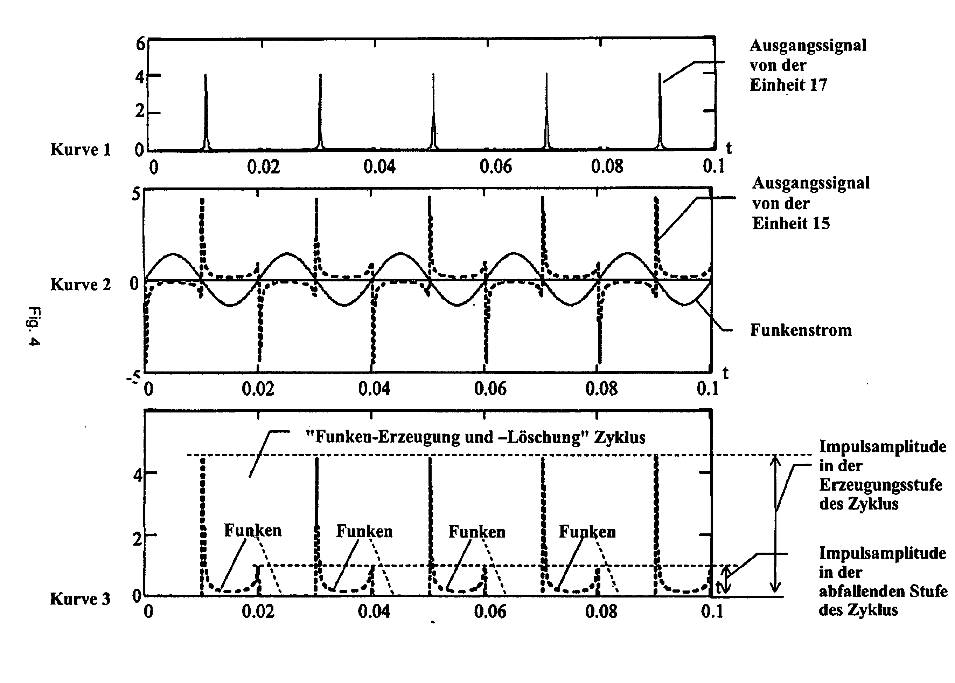

Zur Ermittlung solcher Störungen wurden verschiedene Verfahren und Schutzvorrichtungen entwickelt, die in Stromleitungen und Elektroanlagen verwendet werden. Durch [1] ist in Abb. 4.7 (s. die beigefügte Liste der Informationsquellen) eine Vorrichtung zur Schutzabschaltung (GSA) bekannt, die einen Sensor zur Messung der Stromdifferenz (TEP/TNS, Transformator des Nullstroms), einen Former des elektromagnetischen (EM) Signals zur Netzabschaltung und ein Stellorgan (BO/WO, Auslösevorrichtung) aufweist, das die Stromleitung oder die Elektroanlage abschaltet, falls der Ableitungsstrom die zulässigen Werte überschreitet. Dadurch wird eine Verletzung eines Menschen mit Strom oder ein Brandausbruch verhindert.

Durch die Abb. 4.8 derselben Informationsquelle [1] ist eine Schutzvorrichtung gegen Kurzschluss bekannt, die eine Sensorwicklung, die auf einer Auslösevorrichtung platziert ist und in den Stromkreis des Laststroms dauernd eingeschaltet ist, einen Former eines Freigabesignals (Auslösevorrichtung) und ein Stellorgan aufweist, das die Stromleitung oder die Elektroanlage abschaltet, falls der Strom die Kurzschlussstromstärke erreicht hat.

Diese Vorrichtung, die die Wicklung einer einfachen Auslösevorrichtung enthält, schützt gegen eine Absenkung der Netzspannung unterhalb der zulässigen Größe.

Weiterhin ist durch die Abb. 4.30 in derselben Informationsquelle [1] eine Schutzvorrichtung gegen einen Überlaststrom bekannt, die eine Bimetall-Auslösevorrichtung, die auf einen Haltehebel mit einem Zahn einwirkt, einen Formteil, eine Feder mit Hebeln und Kontakte eines Abschaltautomaten aufweist.

Dem technischen Wesen der vorliegenden Erfindung am nächsten kommt ein in [2] beschriebenes Verfahren und eine Vorrichtung zur Vorbeugung eines Brands, der durch Funken in einem elektrischen Netz oder in einer Elektroanlage verursacht werden kann. Diese Vorrichtung verfügt über eine breitere Gesamtheit von Merkmalen, die auch der Vorrichtung der vorliegenden Erfindung eigen sind. Diese Vorrichtung kann damit als Prototyp gelten.

Gemäß dieser bekannten technischen Lösung wird der Strom des kontrollierten Bereichs der Stromleitung oder der Elektroanlage gemessen; aus dem gemessenen Strom lässt sich mittels einer Filtrierung der ersten Harmonischen oder des ganzen Niederfrequenzspektrums ein Signal der zweiten und/oder einer höheren Harmonischen aussondern, das den Prozess der Wiederherstellung der Spannung im abgebrochenen Stromkreis beim Durchgang des Funkenstroms über die Nullgröße charakterisiert. Die Größe des ausgesonderten Signals lässt sich durch die Intensität und Größe dieses Funkenstroms bestimmen, der vom Übergangswiderstand abhängig ist. Dann wird das Signal verstärkt und gleichgerichtet. Dabei erfolgt die Sammlung des Signals unter Berücksichtigung der vorläufig berechneten Größe des Funkenstroms. Die Größe des Funkenstroms lässt sich aufgrund der Messung und der nachfolgenden Berechnung eines ausgewählten Parameters oder mehrerer Parameter des Zyklus "Entstehung - Löschen des Funkens" in sich bildenden und löschenden Stufen (auf den Strecken des Übergangs des Funkenstroms durch Null) berechnen. Zu diesen Parametern des Zyklus, die von der Größe des Funkenstroms abhängen, zählen beispielsweise die Frequenz der Zyklenfolge, die Dauer der bildenden und löschenden Stufen des Zyklus und die Anzahl der Impulse in der löschenden Stufe des Zyklus, deren Amplituden den ermittelten Wert überschreiten. Das Ergebnis der Sammlung des Signals innerhalb einer bestimmten Zeit wird mit einem vorgegeben zulässigen Wert verglichen. Dabei entsteht am Ausgang der Vorrichtung ein Warnsignal über das entsprechende Niveau der Feuergefahr und/oder ein Befehl zur Abschaltung des kontrollierten Bereichs der fehlerhaften Stromleitung oder der Elektroanlage, die in einer Einheit zur Anzeige der Informationen und/oder in einer Einheit zur Abschaltung des kontrollierten Bereichs der Stromleitung oder der Elektroanlage ankommen.

Die Vorrichtung in [2] für die Verwirklichung des genannten Verfahrens wird dadurch gekennzeichnet, dass sie eine Einheit zur Ermittlung des Funkenstromwerts enthält. Diese Einheit umfasst ein Modul zur Formierung eines Merkmal-Signals im Zyklus "Entstehung - Löschen des Funkens", wobei dieses Merkmal-Signal für jeden genannten Zyklus in der Reihenfolge solcher Zyklen eine Formierung des Impulses des Merkmal-Signals aus dem Signal der zweiten und/oder einer höheren Harmonischen sicherstellt. Diese Einheit umfasst auch ein Modul zur Messung und Berechnung eines Zyklenparameters. Diese Einheit kann auch die Formierung des zeitlichen Intervalls nach dem ersten Impuls im Merkmal-Signal-Zyklus durchführen, in dessen Verlauf sich die Impulse der Merkmal-Signale sammeln. Abschließend wird die Frequenz der Abfolge dieser Zyklen berechnet; und/oder es wird auch ein Modul berechnet, in dem eine Ermittlung der Zeitdauer der bildenden und/oder löschenden Stufe des Zyklus gewährleistet wird, und/oder es wird ein Modul berechnet, in dem die Ermittlung der Anzahl der Impulse auf der löschenden Stufe des Zyklus gewährleistet wird, deren Amplituden den ermittelten Wert überschreiten. Das Modul berechnet die Größe des Funkenstroms aufgrund der berechneten Frequenz der Zyklenabfolge und/oder aufgrund der Dauer der bildenden und/oder löschenden Stufen des Zyklus und/oder aufgrund der Anzahl der Impulse in der löschenden Stufe des Zyklus, deren Amplituden die bestimmte Größe überschreiten. Ein Modul zur Speicherung der berechneten Größe des Funkenstroms gewährleistet die Speicherung der berechneten Größe des Funkenstroms und die Übertragung dieser Größe in eine Sammeleinheit, mit der ein Empfang der berechneten Größe des Funkenstroms, die Gewinnung eines Befehls einer Steuereinheit zur Erzeugung des ermittelten Zeitintervalls und eine Sammlung des Signals innerhalb dieses Intervalls mittels einer Addierung der Anzahl von Impulsen nach dem Eingang jedes Impulses im Merkmal-Signal-Zyklus "Entstehung - Löschen des Funkens" zum vorherigen Ergebnis einer Summierung möglich sind, wobei die Impulsanzahl der berechneten Größe des Funkenstroms entspricht. Mit der Steuereinheit ist jeweils ein Empfang eines Signals für die Erzeugung des angegebenen Befehls bei der Übertragung des berechneten Funkenstromwerts in die Sammeleinheit möglich.

Alle Befehle zur Erfüllung eines vorgegebenen Arbeitsalgorithmus der Vorrichtung werden in der Steuereinheit erzeugt, die beispielsweise in Form eines Mikroprozessors ausgebildet ist. Die Stromversorgung der Vorrichtung erfolgt mit einem Netzteil, das seinerseits von der Stromleitung und/oder von einer leitungsgetrennten Quelle gespeist wird.

Als Nachteil dieser technischen Lösung ist Folgendes zu erwähnen. Es fehlt ein Vorgang zur direkten Messung der Größe der Impulsamplitude in den bildenden und/oder löschenden Stufen des Zyklus "Entstehung - Löschen des Funkens" und/oder der Messungen der Anzahl der Impulse in der bildenden Stufe dieses Zyklus, deren Amplituden die bestimmte Größe überschreiten, wodurch die glaubwürdigste und genaue Ermittlung der Funkenstromgröße unter "verschärften" Anforderungen an die Vorrichtung gewährleistet werden könnte.

Außerdem gelten in der Regel als wichtige Merkmale beim komplexen Schutz von Objekten die Unabhängigkeit der oben genannten Vorrichtungen voneinander hinsichtlich der schematischen und konstruktiven Ausführung sowie die Wiederholbarkeit derselben Funktionen, die meistens durch gemeinsame Knoten und Schemalösungen realisiert werden. Deshalb macht die getrennte Anwendung aller notwendigen Schutzvorrichtungen zur Brand- und Explosionssicherheit deren praktischen Einsatz nicht nur komplizierter und teurer, sondern insgesamt sinkt auch die Zuverlässigkeit des elektrischen Systems.

Durch WO 01/73912 A1, gegen das die Anspruchen 1 und 2 abgegrenzt sind, sind ein Verfahren und eine Vorrichtung zur Vorbeugung eines Brandausbruchs aufgrund einer Störung in elektrischen Netzen oder Elektroanlagen bekannt. Das Verfahren sieht eine:
- Messung des Stroms in einem kontrollierten Bereich, und
- Erzeugung eines Signals der zweiten und/oder einer höheren Harmonischen aus dem Spektrum des Signals des gemessenen Stroms
vor. Das Verfahren und die Vorrichtung ermöglichen wirkungsvoll und zuverlässig zwischen Funkenstrom und durch Dimmer und Kippschwingungs-Oszillatoren gebildeten zulässigen Störquellen zu unterscheiden und dennoch eine Frühwarnung vor gefährlicher Funkenbildung bereitzustellen. Zur Unterscheidung zwischen Funkenbildung und in elektrische Netze eingebrachten Dimmem, Kippschwingungs-Oszillatoren und dergleichen ist vorgesehen, Diskontinuitäten im Strom des elektrischen Netzes zu überwachen, wobei schnelle Störsignale in diskrete Impulse umgewandelt werden, die nachfolgend analysiert werden. Dabei werden Dimmer anhand gleichmäßiger Zeitabstände zwischen den Impulsen erkannt. Kippschwingungs-Oszillatoren und dergleichen werden anhand gleicher Zeitintervalle aufeinander folgender Impulsfolgen erkannt. Die verbleibenden Impulse werden in solche unterteilt, bei denen keine Funkenbildung auftritt, und bei denen Funkenbildung vorliegt. Erstere werden erkannt anhand einer unveränderten Stärke des gemessenen Stroms vor und nach dem Impuls. Bei Zweiteren ändert sich der gemessene Strom. Zur Erfassung der Störsignale wird ein Hochpassfilter eingesetzt, welcher niederfrequente Teile aus dem Spektrum des Signals des gemessenen Stroms eliminiert und schnelle Störsignale passieren lässt. Zur Erfassung der Stromstärke ist dadurch ein zweiter Sensor erforderlich, der mit einem Tiefpassfilter verbunden ist. Ein so erhaltenes Signal wird anschließend gleichgerichtet und verstärkt.

Das Ziel der Erfindung ist die Erhöhung der Glaubwürdigkeit und der Genauigkeit der Messung der Funkenstromwerte sowie die Erweiterung der Funktionalität des Verfahrens zur Vorbeugung eines Brandausbruchs, der aufgrund von Funkenbildungen in der Elektroleitung von Wohn-, Haushalts- und Produktionsräumen und anderen Objekten entstehen kann. Die Erfindung soll den Aufwand beim Aufbau und Betreiben des Systems zur Vorbeugung von aufgrund von Störungen in der Stromleitung und den Elektroanlagen möglichen Brandausbrüchen vermindern.

Das Ziel wird dadurch erreicht, dass das Verfahren zur Vorbeugung eines aufgrund von Störungen in elektrischen Netzen (EN) oder Elektroanlagen (EA) möglichen Brandausbruchs oder einer Explosion Folgendes aufweist: eine Messung des Stroms im kontrollierten Bereich, die Bildung eines Signals der zweiten und/oder einer höheren Harmonischen aus dem Spektrum des Signals des gemessenen Stroms, eine Verstärkung und Gleichrichtung des Signals und eine Ermittlung der Größe des Funkenstroms. Gemäß der angemeldeten Erfindung enthält das Verfahren eine Messung der Kurzschlussstromstärke und/oder des Überlaststroms und/oder des Ableitungsstroms und/oder der Spannung der Stromleitung. Dabei wird die Kurzschlussstromstärke und/oder der Überlaststrom mittels der Abtrennung eines Signals der ersten Harmonischen aus dem gemessenen Strom im kontrollierten Bereich gemessen. Die Messung des Ableitungsstroms und/oder der Spannung der Stromleitung erfolgt entsprechend durch den Anschluss eines Sensors des Ableitungsstroms und/oder des Speisestroms an eine Spannungseinrichtung der Stromleitung oder der Elektroanlage. Zur Ermittlung des Funkenstroms wird die Größe der Amplitude von Impulsen in den bildenden und/oder löschenden Stufen des Zyklus "Entstehung - Löschen des Funkens" und die Anzahl der Impulse auf der bildenden Stufe des Zyklus gemessen, deren Amplituden die vorgegebene Größe überschreiten.

Die Vorrichtung zur Durchführung des angegebenen Verfahrens enthält eine Einheit zur Messung des Stromes im kontrollierten Bereich, eine Einheit zur Erzeugung eines Signals der zweiten und/oder einer höheren Harmonischen, eine Verstärkereinheit, eine Gleichrichtungseinheit und eine Einheit zur Ermittlung der Funkenstromgröße. Die Vorrichtung enthält zusätzlich gemäß der angemeldeten Erfindung eine Einheit zur Erzeugung eines Signals der ersten Harmonischen, eine Einheit zur Messung der Kurzschlussstromstärke und/oder eine Einheit zur Messung des Überlaststroms und/oder eine Einheit zur Messung des Ableitungsstroms mit einem Ableitungsstromsensor und/oder eine Einheit zur Messung der Spannung in der Stromleitung. Dabei ist die Einheit zur Ermittlung der Funkenstromgröße mit einer Einrichtung für die Messungen der Amplitudengröße der Impulse in den bildenden und/oder löschenden Stufen des Zyklus "Entstehung - Löschen des Funkens" und mit der Einheit zur Messung der Anzahl der Impulse in der bildenden Stufe des Zyklus versehen, deren Amplituden die ermittelte Größe überschreiten.

So werden in der bekannten technischen Lösung in [2] neben den Operationen der Abtrennung der Hochfrequenzkomponente des Stroms, der Messung und der Berechnung des gewählten Parameters des Zyklus "Entstehung - Löschen des Funkens", der Berechnung und der Berücksichtigung der Funkenstromgröße zusätzlich die Amplitudegröße der Impulse in den bildenden und/oder löschenden Stufen des Zyklus "Entstehung - Löschen des Funkens" gemessen, und/oder es werden folgende zusätzliche Operationen durchgeführt: die Erzeugung eines Signals der ersten Harmonischen, eine Messung der Eingangssignale, ein Vergleich der gemessenen Größen der Eingangssignale mit deren Vorgabewerten, eine Eingabe von zulässigen Größen der Eingangssignale und die Bildung eines Signals (des Befehls) über Störungen oder Ausfälle beim Betrieb der Stromleitung oder der Elektroanlage.

Ausgehend von der technischen und ökonomischen Zweckmäßigkeit können dabei die aufgezählten zusätzlichen Operationen in vollem oder begrenztem Umfang durchgeführt werden. Die Durchführung der angegebenen Operationen unabhängig oder zusammen mit den bekannten Operationen zur Messung anderer Parameter des Zyklus "Entstehung - Löschen des Funkens" ermöglicht es nicht nur, die Glaubwürdigkeit und die Genauigkeit der Messung der Funkenstromgröße zu erhöhen, sondern auch die Funktionalität dieser technischen Lösung zu erweitern, nämlich statt nur einer Art fünf Arten des Schutzes zu realisieren, und zwar den Schutz vor einer Funkenbildung, den Schutz vor einem Kurzschluss, den Schutz vor einem Überlaststrom, den Schutz vor einem Ableitungsstrom und den Schutz vor einer Absenkung der Spannung im Netz.

Das Vorhandensein der Unterscheidungsmerkmale in der nicht aus dem Stand der Technik bekannten Lösung gemäß der Erfindung erfüllt die Bedingung "Neuheit" in Bezug auf die Patentfähigkeit. Die Gesamtheit der wesentlichen Merkmale der vorliegenden Erfindung, die das Erreichen des angegebenen technischen Ergebnisses bestimmen, resultieren deutlich nicht aus dem Stand der Technik, so dass auch die Patentfähigkeitsbedingung "Erfindungshöhe" der Erfindung gegeben ist.
Die Patentfähigkeitsbedingung "industrielle Anwendbarkeit" wird durch das folgende konkrete Ausführungsbeispiel bestätigt. Es zeigen:
- Fig. 1: eine an ein elektrisches Netz eines Raums angeschlossene Schaltungsanordnung einer Schutzvorrichtung gemäß der Erfindung gegen einen Brandausbruch,
- Fig. 2: Schaltungsanordnungen einer Einheit zur Erzeugung eines Funkenbildungssignals und einer Einheit zur Erzeugung eines Kurzschlussstroms, eines Überlaststroms und eines Ableitungssignals sowie eines Spannungssignals in einer Stromleitung,
- Fig. 3: eine Schaltungsanordnung einer Einheit zur Ermittlung der Größe des Funkenstroms,
- Fig. 4: Diagramme, die die Prozesse, die das Erscheinen eines Funkens begleiten, sowie die Begriffe des Zyklus "Entstehung - Löschen des Funkens" darstellen, und zwar bildende und löschende Stufen dieses Zyklus, nämlich in der Kurve 1 die Form des Signals, das am Ausgang zur Gleichrichtungseinheit bei einem Funken in einem Bereich der kontrollierten Stromleitung oder der Elektroanlage erscheint, in der Kurve 2 der Charakter der Veränderung des Funkenstroms im Laufe der Zeit, der praktisch dem Normbelastungsstrom gleich ist, wobei auch die Form des Signals am Ausgang der Einheit zur Erzeugung des Hochfrequenzspektrums im Moment des Übergangs der Funkenstromgröße durch Null dargestellt ist, und in der Kurve 3 die Definition des Begriffs des Zyklus "Entstehung - Löschen des Funkens" und dessen wesentliche Bestandstufen, nämlich die Bildung des Funkens, der Funkenflug und das Löschens des Funkens.

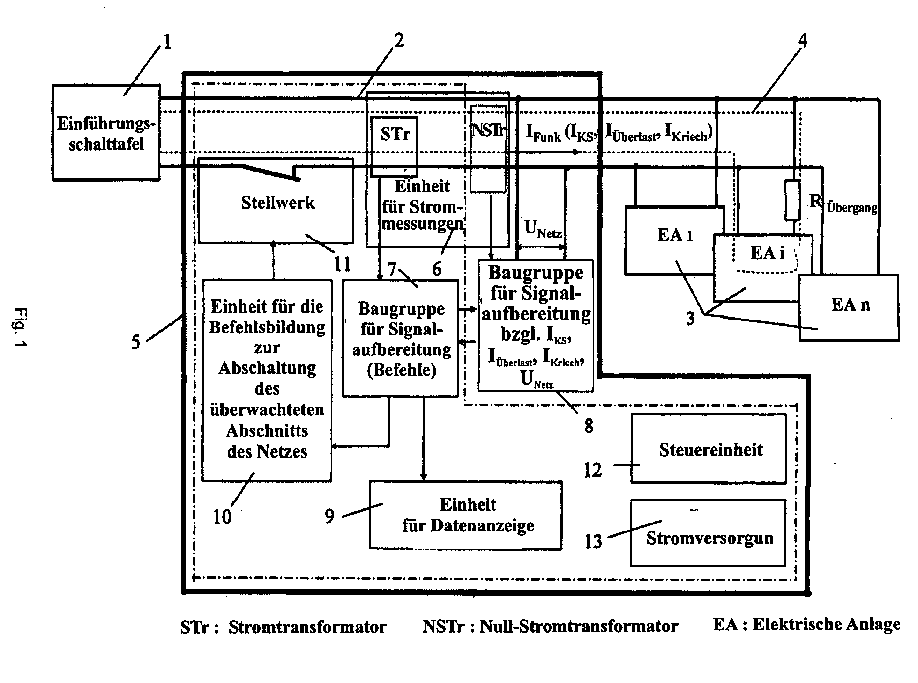

In Fig. 1 ist als Beispiel das Schema eines Raums dargestellt, der einen Anschlusskasten 1 (Einführungsschalttafel), eine Leitung 2 eines elektrischen Netzes (SL), eine Elektroanlage 3 (EA) und einen Stromkreis 4 aufweist. In der Fig. 1 ist auch eine Schaltungsanordnung 5 der Vorrichtung zur Vorbeugung eines aufgrund von Störungen in der Stromleitung 2 und der Elektroanlage 3 (EA) möglichen Brandausbruchs dargestellt. Der Stromkreis 4 bildet sich beim Anschließen einer Belastung an das elektrische Belastungsnetz, das in diesem Beispiel die Elektroanlage EA ist.

Die Vorrichtung 5 enthält eine Einheit 6 zur Strommessung, die für die Messung des zusammengesetzten Stroms vorgesehen ist, eine Einheit 7 zur Erzeugung des Funkensignals (von Befehlen), eine Einheit 8 zur Erzeugung von Kurzschlussstromsignalen 13 (Befehlen), Überlastungsstromsignalen (I_{KS=Kurzschluss}, I_{Überlast}), Signalen der Abweichung des Ableitungsstroms (I_{Kriech}) und der Abweichung der Netzspannung (U_{Netz}), eine Einheit 9 zur Abbildung von Informationen, eine Einheit 10 zur Erzeugung eines Befehls zur Abschaltung eines kontrollierten Bereichs der Stromleitung oder der Elektroanlage, ein Stellorgan 11, eine Steuereinheit 12 und eine Stromversorgungseinheit 13.

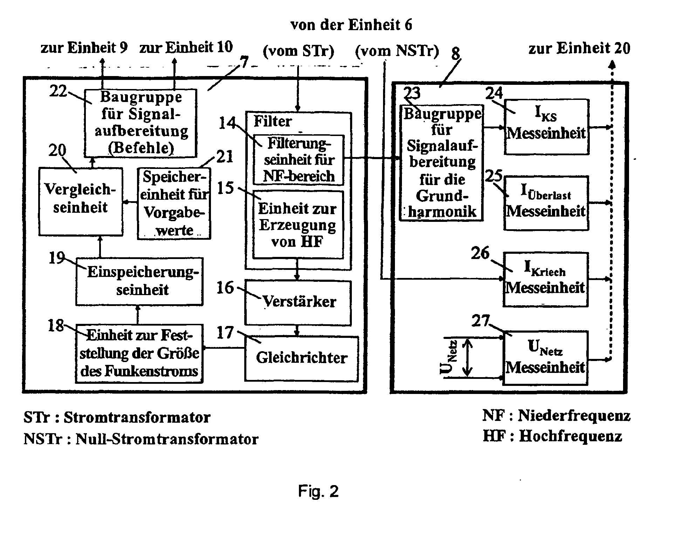

Die Einheit 7 zur Erzeugung des Funkensignals (von Befehlen) besteht aus folgenden Einheiten (Fig. 2): eine Einheit 14 zur Filtrierung des Niederfrequenzspektrums (NFr-Spektrums), eine Einheit 15 zur Erzeugung des Hochfrequenzspektrums (HFr-Spektrums), eine Einheit 16 zur Verstärkung, eine Gleichrichtungseinheit 17, eine Einheit 18 zur Ermittlung der Größe des Funkenstroms, eine Sammeleinheit 19, eine Vergleichseinheit 20, eine Einheit 21 zur Speicherung von Vorgabewerten und eine Einheit 22 zur Erzeugung eines Signals (von Befehlen).

Die Einheiten 7 und 9-13 gehören vollständig zum Typenschema der Vorrichtung zur Vorbeugung eines aufgrund eines Funkenflugs in der Stromleitung oder in der Elektroanlage möglichen Brandausbruchs. In der Einheit 6 ist ein Stromtransformator STr enthalten. Der Aufbau und die Funktionsweise dieser Einheiten 6, 7 sind in der Informationsquelle [2] dargestellt. Die Einheit 8 wird zusätzlich eingeführt. Die Einheit 6 enthält einen Sensor zur Messung eines Signals aus dem Funkenstrom, wobei der Sensor beispielsweise in Form eines Kerns und einer Wicklung ausgeführt werden kann, die zusammen mit zwei oder drei Netzleitungen (für ein Dreiphasennetz) einen Nullstromtransformator NSTr darstellen. Die Einheiten 7und 9-13 sind schon als Bestandteil des Prototyps beschrieben worden.

Die in Fig. 2 dargestellte Einheit 8 zur Erzeugung eines Signals des Funkenbefehls enthält eine Einheit 23 zur Bildung eines Signals der ersten Harmonischen, Einheiten 24-27 zur Messung von Eingangssignalen, nämlich jeweils I_{KS=Kurzschluss}, I_{Überlast}, I_{Kriech} und U_{Netz}. Die gemessenen Größen der Eingangssignale, die eine einheitliche Art aufweisen, beispielsweise eine Impulsform, gelangen auf die jeweiligen Eingänge der Vergleichseinheit 20, in der sie mit Vorgabewerten verglichen werden, die auf andere Eingänge der Vergleichseinheit aus den jeweiligen Ausgängen der Einheit 21 zur Speicherung der Vorgabewerte ankommen.

Die Einheit 23 zur Erzeugung eines Signals der ersten Harmonischen ist zur Abtrennung aus dem vorher abgefilterten Signal des Niederfrequenzspektrums (Einheit 14) des Signals der ersten Harmonische vorbestimmt; für das industrielle Netz in Russland hat dieses Signal eine Frequenz von 50Hz. Das Signal der ersten Harmonischen wird für die Messung des Kurzschlussstroms und des Überlaststroms verwendet.

Die Einheit 24 für die Messung von I_{Kurzschluss} misst den Kurzschlussstrom mittels dessen vorläufiger Wandlung in beispielsweise eine Impulsform (Hauptoperationen: Verstärkung, Gleichrichtung, Wandlung der Gleichspannung in Wechselspannung, deren Frequenz zur Größe des Eingangssignals proportional ist, und einfache Gleichrichtung). Weiterhin wird mit dieser Einheit die Messung der Impulsanzahl innerhalb einer bestimmten Zeit, beispielsweise mittels eines Impulszählers, durchgeführt.

Das Berechnungsergebnis am Ausgang der Einheit 24 gelangt auf den Eingang der Vergleichseinheit 20, in der es mit der vorgegebenen Größe verglichen wird. Der Vorgabewert wird gemäß der Größe der Kurzschlussstromstärke in die Vergleichseinheit 20 aus der Einheit 21 zur Speicherung der Vorgabewerte auf Befehl der Steuereinheit 12 weitergeleitet.

Das Vergleichergebnis in Form eines Impulses, der bei der Abweichung der gemessenen Größe von der zulässigen Größe erzeugt wird, gelangt in die Einheit 22 zur Erzeugung eines Signals (Befehle). Vom Ausgang der Einheit 22 gelangt das Signal zur Anzeige von Informationen in die Einheit 9 und/oder in die Einheit 10 zur Erzeugung eines Befehls für die Abschaltung des kontrollierten Bereichs der Stromleitung oder der Elektroanlage.

Auf diese Weise wird der Schutz gegen einen Kurzschlussstrom mittels des Einsatzes der Einheit 8 und der Einheiten 14, 23, 24, 20, 21, 22, 9, 10, 11, 12, 13 realisiert.

Anmerkung: unter den obigen Nummern der Einheiten sind auch solche Einheiten enthalten, die in der Schutzvorrichtung gegen die Funkenbildung verwendet werden.

Auf gleiche Weise wird die Funktion der Schutzvorrichtung organisiert:
- gegen den Überlastungsstrom I_{Überlast} die Einheiten 14, 23, 25, 20, 21, 22, 9, 10,11, 12, 13),
- gegen den Ableitungsstrom I_{Kriech} die Einheiten 26, 20, 21, 22, 9, 10, 11, 12, 13) und
- gegen die Absenkung der Netzspannung U_{Netz} die Einheiten 27, 20, 21, 22, 9, 10, 11, 12, 13.

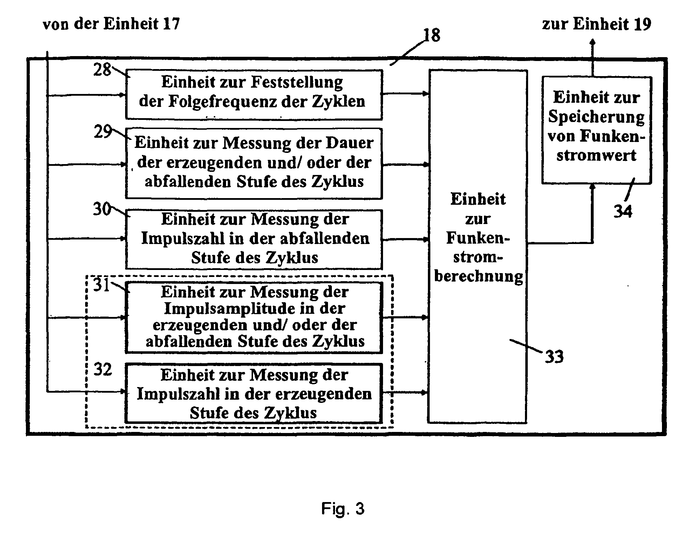

Die Einheit 18 (Fig. 3) zur Ermittlung der Funkenstromgröße besteht aus einem Modul 28 zur Ermittlung der Frequenz der Zyklenfolge, einem Modul 29 zur Messung der Dauer der bildenden und/oder löschenden Stufe des Zyklus, einem Modul 30 zur Messung der Impulsanzahl in der löschenden Stufe des Zyklus, einem Modul 31 zur Messung der Amplitude der Impulse in der bildenden und/oder löschenden Stufe des Zyklus, einem Modul 32 zur Messung der Impulsanzahl in der bildenden Stufe des Zyklus, deren Größe den vorgegebenen Wert überschreitet, einem Modul 33 zur Berechnung der Funkenstromgröße und einem Modul 34 zur Speicherung der Funkenstromgröße.

Der komplexe Schutz der Objekte wird durch die Messungen eines Signals des Funkenstroms I_{Funken}, die Messung des Kurzschlussstroms I_{kurzschluss}, die Messung des Überlaststroms I_{Überlast}, die Messung des Ableitungsstroms I_{Kriech} und die Messung der Netzspannung U_{Netz} erreicht Der Prozess der Messung der genannten Eingangssignale wird durch die Erzeugung eines Ausgangsignals (Alarmsignal der Feuergefahr) und/oder einen Befehl zur Abschaltung des kontrollierten Bereichs im elektrischen Netz oder der Elektroanlage beendet.

Die Vorrichtung zur Vorbeugung eines aufgrund von Störungen in einer Stromleitung und Elektroanlage möglichen Brandausbruchs arbeitet auf folgende Weise. Die Schaltungsanordnung 5 misst mittels der Einheit 6 zur Messung des Summenstroms der Belastung im kontrollierten Bereich der Stromleitung oder der Elektroanlage den Leitungsstrom und den Nullstrom, und zwar mittels des Stromtransformators STr und des Nullstromtransformators NSTr; die Schaltungsanordnung 5 ist dabei an einen Eingangskasten 1 (Einführungsschalttafel) angeschlossen. An diesen Eingangskasten 1 ist die Einheit 8 zur Messung der Netzspannung U_{Netz} des elektrischen Netzes 2 angeschlossen. So wird das gesamte elektrische Netz (alle Elektroanlagen) kontrolliert, das sich außerhalb des Aufstellungsorts der Vorrichtung (im angeführten Beispiel hinter dem Eingangskasten 1) befindet.

Als Beispiel soll die Funktionsweise der Schutzvorrichtung gegen den Funkenstrom betrachtet werden.

Im intakten Zustand der elektrischen Leitung 2 und der Elektroanlagen 3 (Fig. 1) fließt ein Strom mit der Frequenz des Einspeisungsnetzes, dessen Größe gleich der Summe der Ströme der Belastung aller Verbraucher ist, über die Leitung 2, die gleichzeitig die Primärwicklung des Transformators für den Strom der Einheit 6 für die Strommessungen-ist. Die elektromotorische Kraft (EMK), die in der Sekundärwicklung des Stromtransformators vorhanden ist, gelangt zum Eingang der Einheit 7 zur Erzeugung des Funkensignals (Befehle). In der Einheit 7 (Fig. 2) geht das Signal durch den Filter, der beispielsweise auf ein Niederfrequenzspektrum abgestimmt ist. Deshalb wird das Signal, dessen Frequenz der Frequenz des Versorgungsnetzes gleich ist, vollständig ausgefiltert und in die Einheit 23 zur Erzeugung eines Signals der ersten Harmonischen weitergeleitet. Dabei ist die Signalgröße am Eingang der Verstärkungseinheit 16 unabhängig von der Belastungsstromgröße beim Fehlen einer Störung immer gleich Null. Nach der Gleichrichtungseinheit 17, der Einheit 18 zur Ermittlung der Funkenstromgröße sowie nach der Sammeleinheit 19 wird eine konstante Komponente des Signals auftreten, deren Größe durch Fehler der Filtereinstellungen, durch nichtlineare Verzerrungen des gemessenen Belastungsstroms und durch zulässige Werte der Übergangswiderstände in jedem der Kontakte der Schaltapparatur und der Verbindungsdrähte bestimmt wird; dies wird von der Vergleichseinheit 20 als logische Null wahrgenommen.

Beim Entstehen einer Störung, die mit der Bildung des ionisierten Übergangswiderstands an der Stelle beispielsweise eines Kontakts schlechter Qualität verbunden ist, erscheint im elektrischen Stromkreis 4 der Elektroanlage 3 (EA) ein Funkenstrom (Strom von freien lonen und Elektronen), der sich in Form der Reihenfolge der Zyklen "Entstehung - Löschen des Funkens" zeigt. Daraufhin entsteht eine Hochfrequenzkomponente des Stroms.

In der Sekundärwicklung des Stromtransformators STr der Einheit 6 zur Strommessung wird eine elektromotorische Kraft erzeugt. Am Ausgang des Filters erscheint ein Signal des Hochfrequenzspektrums, das zum Eingang der Verstärkereinheit 16 gelangt. Das verstärkte Signal wird im Block 17 gleichgerichtet und gelangt in die Einheit 18 zur Ermittlung der Funkenstromgröße, unter anderem in das Modul 31, in dem mittels eines Analog-Digital-Wandlers eine Messung der Amplitude der Impulse, beispielsweise in der löschenden Stufe des Zyklus nach dem erstem und/oder nach einem anderen auswählten Impuls durchgeführt wird. Das Signal, das zu der gemessenen Amplitude des Impulses proportional ist, gelangt zum Modul 33 zur Berech-nung der Funkenstromgröße, dessen Ausgang an den Eingang des Moduls 34 zur Speicherung der Funkenstromgröße angeschlossen ist.

Nach der Speicherung der berechneten Funkenstromgröße erzeugt die Steuereinheit 12 einen Befehl für die Ausarbeitung des festgestellten Zeitintervalls und für die Signalsammlung innerhalb dieser Zeit, wobei die Signalsammlung in der Einheit 19 nach dem Eingang jedes Impulses oder des Zyklus "Entstehung - Löschen des Funkens" durch das Addieren der Zahl zum vorherigen Ergebnis der Summierung erfolgt und diese Zahl der Größe des im Modul 34 gespeicherten Funkenstroms entspricht.

Das Niveau des gesammelten Signals, das durch die Intensität des Eingangs von Impulsen oder Zyklen "Entstehung - Löschen des Funkens" und durch die Funkenstromgröße bestimmt wird, wird ständig mit seinem zulässigen Wert (Werten) verglichen, der (die) in der Einheit 21 gespeichert wird (werden). Falls das gesammelte Signal den zulässigen Wert überschreitet, wird am Ausgang der Vergleichseinheit ein Signal der jeweiligen Gefahrenstufe erzeugt, das in die Einheit zur Erzeugung eines Signals gelangt. In der Einheit 22 werden die Parameter des Signals auf die Größe gebracht, die für die Versorgung der normalen Arbeit der Einheit 9 zur Anzeige der Information und der Einheit 10 zur Abschaltung des kontrollierten Netzbereichs erforderlich und ausreichend ist.

Im Ergebnis der Verwendung dieser Erfindung in Industrie- und Haushaltsobjekten sowie in den Strukturen der Qualitätsüberwachung bei deren Projektierung und Betrieb erhöht sich insgesamt die Betriebssicherheit dieser Objekte und unter anderem deren Feuersicherheit. Außerdem sinkt der Aufwand für die Realisierung des komplexen Schutzes hinsichtlich der Vorbeugung von Brandausbrüchen und Explosionen, die durch Störungen in den elektrischen Netzen und den Elektroanlagen verursacht werden. Insgesamt steigt die Zuverlässigkeit der elektrotechnischen Systeme. Die letzte Behauptung wird von den unten angeführten Zahlen bestätigt:
- die zusätzliche Verwendung von 4 unabhängigen Schutzvorrichtungen verlangt die Einführung von 38 neuen Einheiten;
- die zusätzliche Verwendung von 4 Schutzvorrichtungen, die mit dem Schutz gegen die Funkenbildung gekoppelt sind, verlangt die Einführung von 14 neuen Einheiten.

Die Verwendung dieser Erfindung führt zur Senkung der Anzahl der Feuerentzündungen in Wohn- und Produktionsräumen, Einrichtungen, Gebäuden, Flugzeugen, Schiffen, der Eisenbahn und in anderen Objekten, in denen elektrische Netze und Elektroanlagen eingesetzt werden. Außerdem wird die Anzahl der Verletzungen von Menschen durch elektrischen Strom sowie die Anzahl von Ausfällen der Haushaltstechnik und anderer Techniken bei der unzulässigen Absenkung der Spannung im elektrischen Netz geringer.

Die Verwendung der Vorrichtung zur Durchführung des Verfahrens gemäß der Erfindung kann mit dem Einsatz von Serienteilen und Serienelementen verbunden sein. Dadurch wird vermieden, dass Industrieunternehmen und private Firmen für den Einsatz der Schutzvorrichtung umgestaltet werden müssen.

Der ökonomische und moralische Gewinn bei der Verwendung der Erfindung lässt sich durch die Zahl der Menschenleben und durch die Menge sowie den Wert der Wohn-, Produktions- und anderer Objekte bestimmen, die vor den Bränden mit der Schutzvorrichtung gemäß der Erfindung gerettet werden.

Somit wird die Verwendung des Verfahrens gemäß der Erfindung zur Vorbeugung eines Brandausbruchs, der durch eine Störung im elektrischen Netz oder in der Elektroanlage verursacht wird, den Schutz der Menschen, der Wohn-, Produktions- und anderer Objekte vor der vernichtenden Wirkung von Bränden erhöhen sowie eine wesentliche Einsparung von materiellen und finanziellen Mitteln jedes Bürgers und des Staates insgesamt gewährleisten.

### Liste der Informationsquellen

[1] I. S. Taev, "Die elektrischen Apparate der Verwaltung", Moskau, Verlag Vysschaya schkola, 1984.
[2] Patentanmeldung RU 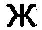 2003120730, M 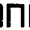 K 7, G08B017-06, G08B 25/10, Anmeldetag 10.7.2003, Beschluss vom 1.2.2005 über die Patenterteilung für die Erfindung "Verfahren und Vorrichtung zur Vorbeugung eines Brandausbruchs aufgrund einer Funkenbildung in einem elektrischen Netz".

## Patentansprüche

1. Verfahren zur Vorbeugung eines Brandausbruchs aufgrund einer Störung in elektrischen Netzen (EN) oder Elektroanlagen (EI) mit:
- einer Messung des Stroms (6) in einem kontrollierten Bereich,
- der Erzeugung eines Signals (15) der zweiten und/oder einer höheren Harmonischen aus dem Spektrum des Signals des gemessenen Stroms,
- einer Ermittlung der Funkenstromgröße,
wobei zur Ermittlung des Funkenstroms;
- die Größe der Impulsamplitude (31) in der bildenden und/oder löschenden Stufe eines Zyklus "Entstehung - Löschen des Funkens" und
- in der bildenden Stufe des Zyklus die Anzahl der Impulse (32) gemessen wird, deren Amplituden einen vorgegebenen Wert überschreiten,
**dadurch gekennzeichnet,**
**dass** Messungen:
- des Kurzschlussstroms (26) und/oder
- des Überlaststroms (25) und/oder
- des Ableitungsstroms und/oder
- der Spannung des elektrischen Netzes
durchgeführt werden, wobei:
- der Kurzschlussstrom und/oder der Überlaststrom durch die Abtrennung eines Signals der ersten Harmonischen (23) aus dem gemessenen Strom in einem kontrollierten Bereich gemessen wird,
- die Messung (26) des Ableitungsstroms und/oder der Spannung (27) des elektrischen Netzes mittels:
- des Anschlusses eines Sensors des Ableitungsstroms und/oder
- der Zuführung der Spannung des elektrischen Netzes oder der Elektroanlage an eine entsprechende Schutzvorrichtung
durchgeführt wird,
und wobei
- eine Verstärkung (16) und einer Gleichrichtung (17) des erzeugten Signals der zweiten und/odereiner höheren Harmonischen vorgesehen ist, wobei das verstärkte und gleichgerichtete Signal zur Ermittlung der Funkstromgröße benutz wird.

2. Vorrichtung (5) zur Durchführung des Verfahrens nach Anspruch 1 mit:
- einer Einheit (6) zur Messung des Stroms in einem kontrollierten Bereich,
- einer Einheit (7) zur Erzeugung eines Signals der zweiten und/oder einer höheren Harmonischen aus dem Spektrum des Signals des gemessenen Stroms,
- einer Verstärkereinheit (16) des erzeugten Signals,
- einer Gleichrichtungseinheit (17) des erzeugten Signals und
- einer Einheit (18) zur Ermittlung der Funkenstromgröße, wobei
- die Einheit (18) zur Ermittlung der Funkenstromgröße mit einer Einheit (31) zur Messung der Impulsamplitude in der bildenden und/oder löschenden Stufe des Zyklus "Entstehung - Löschen des Funkens" und mit einer Einheit (32) zur Messung der Anzahl der Impulse in der bildenden Stufe des Zyklus versehen ist, deren Amplituden den vorgegebenen Wert überschreiten, wobei das Signal in die Einheit (18) zur Ermittlung der Funkenstromgröße eingespeist wird,
**dadurch gekennzeichnet,**
**dass** sie mit:
einer Sammeleinheit (19), einer Vergleichseinheit (20), einer Einheit (21) zur Speicherung von Vorgabewerten, einer Einheit (23) zur Erzeugung eines Signals der ersten Harmonischen aus dem Spektrum des Signals des gemessenen Stroms, ferner mit einer Einheit (24) zur Messung des Kurzschlussstroms und/oder einer Einheit (25) zur Messung des Überlaststroms und/oder einer Einheit (26) zur Messung des Ableitungsstroms mit einem Ableitungsstromsensor und/oder einer Einheit (27) zur Messung der Spannung des elektrischen Netzes versehen ist.

## Claims

1. A method for preventing fire from breaking out because of a fault in electrical networks (EN) or electrical systems (EI), having
- a measurement of the current (6) in a controlled region,
- the generation of a signal (15) of the second and/or a higher harmonic from the spectrum of the signal of the measured current,
- an ascertainment of the magnitude of the spark current,
wherein for ascertaining the spark current:
- the magnitude of the pulse amplitude (31) in the formation and/or extinguishing stage of a cycle called "creating/extinguishing the spark"; and
- in the formation stage of the cycle, the number of pulses (32) whose amplitudes exceed a predetermined value is measured,
**characterized in that**
measurements are made of:
- the short-circuit current (26) and/or
- the overload current (25) and/or
- the shunt current and/or
- the voltage of the electrical network,
and
- the short-circuit current and/or the overload current is measured in a controlled range by the separation of a signal of the first harmonic (23) from the measured current;
- the measurement (26) of the shunt current and/or the voltage (27) of the electrical network is made by means of
- the connection of a sensor for the shunt current and/or by means of
- the delivery of the voltage ofthe electrical network or of the electrical system to a corresponding protection device,
and
- an amplification (16) and a rectification (17) of the generated signal of the second and/or higher harmonic is provided, the amplified and rectified signal being used for ascertaining the magnitude of the spark current.

2. A device (5) for performing the method of claim 1, having:
- a unit (6) for measuring the current in a controlled range,
- a unit (7) for generating a signal of the second and/or higher harmonic from the spectrum of the signal of the measured current;
- an amplifier unit (16) of the generated signal,
- a rectification unit (17) ofthe generated signal, and
- a unit (18) for ascertaining the magnitude of the spark current, wherein
- the unit (18) for ascertaining the magnitude of the spark current is provided with a unit (31) for measuring the pulse amplitude in the formation and/or extinguishing stage of a cycle called "creating/extinguishing the spark" and is also provided with a unit (32) for measuring the number of pulses in the formation stage of the cycle whose amplitudes exceed a predetermined value is measured, the signal being inserted into the unit (18) for ascertaining the magnitude of the spark current,
**characterized in that**
- it is provided with:
a collection unit (19), a comparison unit (20), a unit (21) for storing predetermined values in memory, and a unit (23) for generating a signal of the first harmonic from the spectrum of the signal ofthe measured current, and is also provided with a unit (24) for measuring the short-circuit current, and/or a unit (25) for measuring the overload current, and/or a unit (26) for measuring the shunt current with a shut current sensor, and/or a unit (27) for measuring the voltage of the electrical network.

## Revendications

1. Procédé de prévention d'un incendie dû à une défaillance dans des réseaux électriques (EN) ou des installations électriques (EI), consistant à :
- mesurer le courant (6) dans une zone contrôlée,
- générer un signal (15) de la deuxième harmonique et/ou d'une harmonique supérieure à partir du spectre du signal du courant mesuré,
- déterminer la grandeur du courant d'étincelle,
le courant d'étincelle étant déterminé en mesurant ;
- la grandeur de l'amplitude des impulsions (31) dans la phase de formation et/ou d'extinction d'un cycle « formation - extinction de l'étincelle » et
- dans la phase de formation du cycle, le nombre d'impulsions (32) dont les amplitudes dépassent une valeur prédéfinie,
**caractérisé en ce**
**que** des mesures :
- du courant de court-circuit (26) et/ou
- du courant de surcharge (25) et/ou
- du courant de fuite et/ou
- de la tension du réseau électrique
sont effectuées, sachant que :
- le courant de court-circuit et/ou le courant de surcharge sont mesurés par séparation d'un signal de la première harmonique (23) du courant mesuré dans une zone contrôlée,
- la mesure (26) du courant de fuite et/ou de la tension (27) du réseau électrique est effectuée au moyen :
- du raccordement d'un capteur du courant de fuite et/ou
- de l'amenée de la tension du réseau électrique ou de l'installation électrique à un dispositif de protection correspondant,
et sachant
- **qu'**il est prévu une amplification (16) et un redressement (17) du signal généré de la deuxième harntonique et/ou d'une harmonique supérieure, le signal amplifié et redressé étant utilisé pour déterminer la grandeur du courant d'étincelle.

2. Dispositif pour mettre en oeuvre le procédé selon la revendication 1, comprenant :
- une unité (6) pour mesurer le courant dans une zone contrôlée,
- une unité (7) pour générer un signal de la deuxième harmonique et/ou d'une harmonique supérieure à partir du spectre du signal du courant mesuré,
- une unité d'amplification (16) du signal généré,
- une unité de redressement (17) du signal généré et
- une unité (18) pour déterminer la grandeur du courant d'étincelle, sachant que
- l'unité (18) pour déterminer la grandeur du courant d'étincelle est pourvue d'une unité (31) pour mesurer l'amplitude des impulsions dans la phase de formation et/ou d'extinction du cycle « formation - extinction de l'étincelle » et d'une unité (32) pour mesurer le nombre d'impulsions dans la phase de formation du cycle dont les amplitudes dépassent la valeur prédéfinie, le signal étant injecté dans l'unité (18) pour déterminer la grandeur du courant d'étincelle,
**caractérisé en ce**
**qu'**il est pourvu :
d'une unité collectrice (19), d'une unité de comparaison (20), d'une unité (21) pour stocker des valeurs de référence, d'une unité (23) pour générer un signal de la première harmonique à partir du spectre du signal du courant mesuré ainsi que d'une unité (24) pour mesurer le courant de court-circuit et/ou d'une unité (25) pour mesurer le courant de surcharge et/ou d'une unité (26) pour mesurer le courant de fuite avec un capteur de courant de fuite et/ou d'une unité (27) pour mesurer la tension du réseau électrique.
